# EUROPEAN PATENT APPLICATION

(11) **EP 4 530 918 A1**
(43) Date of publication of application: **02.04.2025**
(21) Application number: 24188273.7
(22) Date of filing: 12.07.2024
(51) Int. Cl.: G06F 30/343, G06F 30/34, G06F 30/347, G06F 30/394, G06F 111/20, G06F 115/08, H03K 19/17732, H03K 19/17736

(54) **FAST CAD COMPILATION THROUGH COARSE MACRO LOWERING**

(30) Priority: 27.09.2023 US 202318475512
(71) Applicant: INTEL Corporation, Santa Clara, CA 95054 (US)
(72) Inventor: SINCLAIR, Byron, Toronto,, ON, M6K 2M4 (CA); KINSNER, Michael, Halifax, Nova Scotia,, B3N 1R3 (CA); ZHANG, Victor, Santa Clara, 95054 (US); BAECKLER, Gregg, San Jose, CA 95126 (US); IYER, Mahesh, Fremont, CA 94539 (US); LIANG, Chengping, Toronto (CA); SINGH, Deshanand, Santa Clara, 95054 (US)
(74) Representative: Viering, Jentschura & Partner mbB Patent- und Rechtsanwälte

(57) **Abstract**

Systems or methods of the present disclosure may provide a library including multiple macros that may be pre-compiled prior to implementation of the design. For example, a design may be mapped to one or more macros in the library, and the one or more macros may be placed into and routed between a portion of a region, one region, one or more regions of the integrated circuit device to implement the design. Since the macros may be pre-compiled, compilation time experienced by the designer may correspond to the placement and routing of the one or more macros, which may be less than compilation time for fine-grained operations. The pre-compiled logic within the macros may be set using a lookup table mask to set and/or adjust a functionality of the macro. Additionally or alternatively, the place and route operation may be performed at finer granularities to reduce bottle necks.

## Description

### BACKGROUND

The present invention relates generally to programmable logic devices. More particularly, the present disclosure relates to reducing compilation time for programmable logic devices, such as high-capacity field programmable gate arrays (FPGAs).

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Programmable logic devices, a class of integrated circuits, may be programmed to perform a wide variety of operations. For example, a design may be implemented on a programmable logic device with design software, such as computer-aided design (CAD) software. The design software may include the option to use macros to implement a design. However, the implementation may take a long time to compile and may vary in quality of results (QoR). For example, the macros may be placed and routed at many different locations of the programmable device and individually placed and routed for each implementation, which may increase compilation time and also result in QoR variability. That is, the place and route operation may increase compilation time and QoR variability. Both the long compilation time and the QoR variability may increase development costs, development time, and uncertainty in time to reach the market. Indeed, as programmable logic devices increase in complexity and/or increase in size, the compilation time and/or the QoR for programmable logic devices may become even more computationally intensive, resource-intensive, and cost-intensive due to the increasing number of fine-grained elements.

### BRIEF DESCRIPTION OF THE DRAWINGS

Various aspects of this disclosure may be better understood upon reading the following detailed description and upon reference to the drawings in which:
FIG. 1 is a block diagram of a system used to program an integrated circuit device, in accordance with an embodiment of the present disclosure;
FIG. 2 is a block diagram of the integrated circuit device of FIG. 1, in accordance with an embodiment of the present disclosure;
FIG. 3 is a block diagram of programmable fabric of the integrated circuit device of FIG. 1, in accordance with an embodiment of the present disclosure;
FIG. 4 is a block diagram of programmable fabric of the integrated circuit device of FIG. 1 implementing a design using macros, in accordance with an embodiment of the present disclosure;
FIG. 5 is a flowchart of an example method for generating one or more macros for a library and configuring the integrated circuit device of FIG. 1 using the one or more macros, in accordance with an embodiment of the present disclosure;
FIG. 6 is a flowchart of an example method for configuring the integrated circuit device of FIG. 1 using the one or more macros, in accordance with an embodiment of the present disclosure;
FIG. 7 is a schematic diagram for recursively performing the place and route operation for one or more macros on the integrated circuit device of FIG. 1, in accordance with an embodiment of the present disclosure;
FIG. 8 is a schematic diagram for adjusting the one or more macros to implement the design on programmable fabric of the integrated circuit device of FIG. 1, in accordance with an embodiment of the present disclosure;
FIG. 9 is a flowchart of an example method for reconfiguring the one or more macros to implement the design on the integrated circuit device of FIG. 1, in accordance with an embodiment of the present disclosure; and
FIG. 10 is a is a block diagram of a data processing system including the integrated circuit device of FIG. 1, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time-consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

The present disclosure describes systems and techniques related to implementing a design using coarse-grained operations onto integrated circuitry, such as high-capacity field programmable gate arrays (FPGAs), to decrease compilation time and/or increase quality of results (QoR). In particular, the embodiments described herein are directed to placing and routing one or more pre-compiled macros on programmable fabric of an integrated circuit device. The macros may include groupings of logical elements that may be mapped (e.g., tech-mapped), placed (e.g., loaded) into a regions of programmable fabric, and internally routed. To this end, the programmable fabric may include regions made up of one or more sectors, groups of sectors, a portion of a sector, partitions, groups of partitions, a portion of a partition, and so on. The pre-compiled macros may be placed (e.g., loaded) in regions of the programmable fabric, and routing resources may be used to communicatively couple the macros to implement the design. In this way, placement of the macros are constrained to the regions. Since the macros are pre-compiled prior to the place and route operation and placement is constrained to certain regions, designer compilation time may be reduced and/or QoR may be improved. That is, the implementation of coarse-grained operations rather than fine-grained operations may reduce a number of place and route decisions made during the compilation. Additionally or alternatively, variability of QoR may decrease as placement of macros are constrained to certain regions of the integrated circuit device.

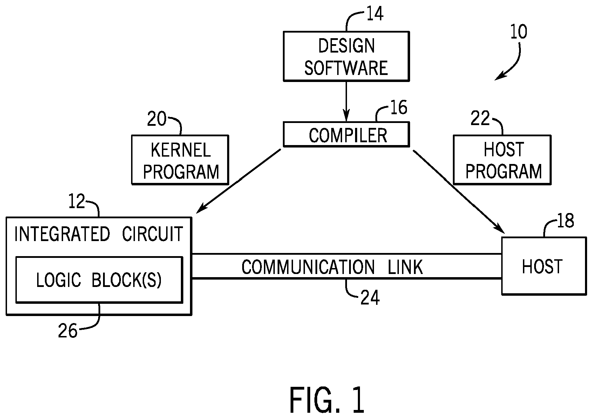

With the foregoing in mind, FIG. 1 illustrates a block diagram of a system 10 that may implement one or more functionalities. For example, a designer may desire to implement functionality, such as the operations of this disclosure, on an integrated circuit device 12 (e.g., a programmable logic device, such as a field programmable gate array (FPGA) or an application specific integrated circuit (ASIC)). In some cases, the designer may specify a high-level program to be implemented, such as an OpenCL^{®} program or SYCL^{®}, which may enable the designer to more efficiently and easily provide programming instructions to configure a set of programmable logic cells for the integrated circuit device 12 without specific knowledge of low-level hardware description languages (e.g., Verilog or VHDL). For example, since OpenCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

The designer may implement high-level designs using design software 14, such as a version of INTEL^{®} QUARTUS^{®} by INTEL CORPORATION. The design software 14 may use a compiler 16 to convert the high-level program into a lower-level description. In some embodiments, the compiler 16 and the design software 14 may be packaged into a single software application. The compiler 16 may provide machine-readable instructions representative of the high-level program to a host 18 and the integrated circuit device 12. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of a logic block 26 on the integrated circuit device 12. The logic block 26 may include circuitry and/or other logic elements and may be configured to implement arithmetic operations, such as addition and multiplication.

The designer may use the design software 14 to generate and/or to specify a low-level program, such as the low-level hardware description languages described above. For example, the design software 14 may be used to map a workload to one or more routing resources of the integrated circuit device 12 based on a timing, a wire usage, a logic utilization, and/or a routability. Additionally or alternatively, the design software 14 may be used to route first data to a portion of the integrated circuit device 12 and route second data, power, and clock signals to a second portion of the integrated circuit device 12. Further, in some embodiments, the system 10 may be implemented without a host program 22 and/or without a separate host program 22. Moreover, in some embodiments, the techniques described herein may be implemented in circuitry as a non-programmable circuit design. Thus, embodiments described herein are intended to be illustrative and not limiting.

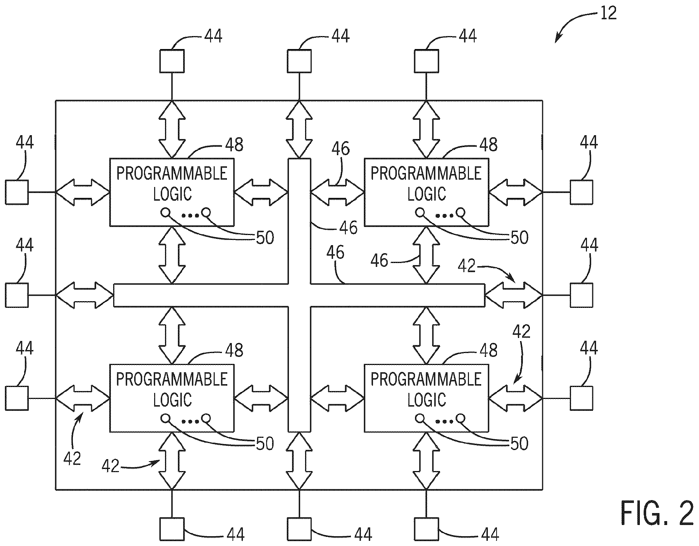

Turning now to a more detailed discussion of the integrated circuit device 12, FIG. 2 is a block diagram of an example of the integrated circuit device 12 as a programmable logic device, such as a field-programmable gate array (FPGA). Further, it should be understood that the integrated circuit device 12 may be any other suitable type of programmable logic device (e.g., a structured ASIC such as eASIC^{™} by Intel Corporation ASIC and/or application-specific standard product). The integrated circuit device 12 may have input/output circuitry 42 for driving signals off the device and for receiving signals from other devices via input/output pins 44. Interconnection resources 46, such as global and local vertical and horizontal conductive lines and buses, and/or configuration resources (e.g., hardwired couplings, logical couplings not implemented by designer logic), may be used to route signals on integrated circuit device 12. Additionally, interconnection resources 46 may include fixed interconnects (conductive lines) and programmable interconnects (i.e., programmable connections between respective fixed interconnects). For example, the interconnection resources 46 may be used to route signals, such as clock or data signals, through the integrated circuit device 12. Additionally or alternatively, the interconnection resources 46 may be used to route power (e.g., voltage) through the integrated circuit device 12. Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of programmable logic 48.

Programmable logic devices, such as the integrated circuit device 12, may include programmable elements 50 with the programmable logic 48. In some embodiments, at least some of the programmable elements 50 may be grouped into logic array blocks (LABs). As discussed above, a designer (e.g., a user, a customer) may (re)program (e.g., (re)configure) the programmable logic 48 to perform one or more desired functions. By way of example, some programmable logic devices may be programmed or reprogrammed by configuring programmable elements 50 using mask programming arrangements, which is performed during semiconductor manufacturing. Other programmable logic devices are configured after semiconductor fabrication operations have been completed, such as by using electrical programming or laser programming to program the programmable elements 50. In general, programmable elements 50 may be based on any suitable programmable technology, such as fuses, anti-fuses, electrically programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using input/output pins 44 and input/output circuitry 42. In one embodiment, the memory cells may be implemented as random-access-memory (RAM) cells. The use of memory cells based on RAM technology as described herein is intended to be only one example. Further, since these RAM cells are loaded with configuration data during programming, they are sometimes referred to as configuration RAM cells (CRAM). These memory cells may each provide a corresponding static control output signal that controls the state of an associated logic component in programmable logic 48. In some embodiments, the output signals may be applied to the gates of metal-oxide-semiconductor (MOS) transistors within the programmable logic 48.

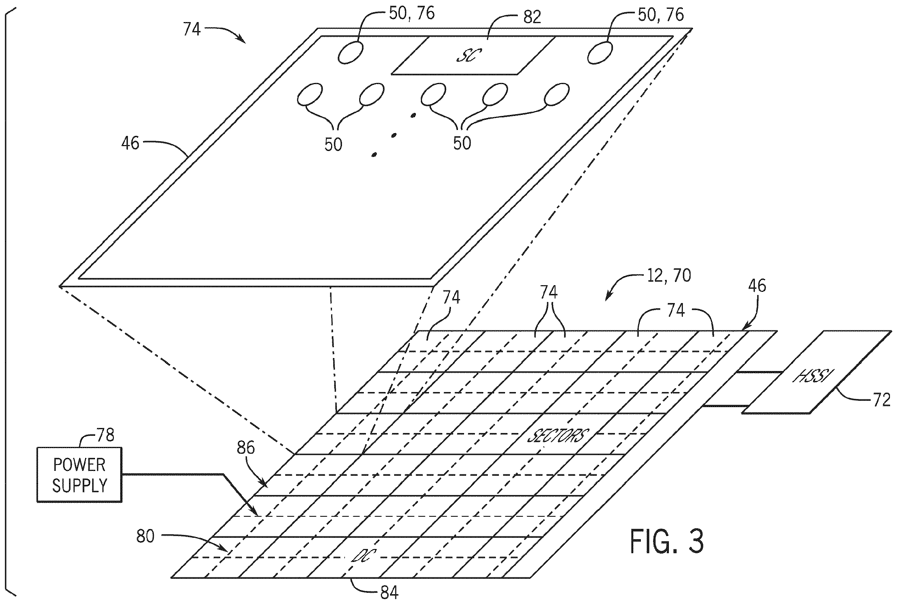

The integrated circuit device 12 may include any programmable logic device such as a field programmable gate array (FPGA) 70, as shown in FIG. 3. For the purposes of this example, the FPGA 70 is referred to as a FPGA, though it should be understood that the device may be any suitable type of programmable logic device (e.g., an application-specific integrated circuit and/or application-specific standard product). In one example, the FPGA 70 is a sectorized FPGA of the type described in U.S. Patent Publication No. 2016/0049941, "Programmable Circuit Having Multiple Sectors," which is incorporated by reference in its entirety for all purposes. The FPGA 70 may be formed on a single plane. Additionally or alternatively, the FPGA 70 may be a three-dimensional FPGA having a base die and a fabric die of the type described in U.S. Patent No. 10,833,679, "Multi-Purpose Interface for Configuration Data and Designer Fabric Data," which is incorporated by reference in its entirety for all purposes.

In the example of FIG. 3, the FPGA 70 may include transceiver 72 that may include and/or use input/output circuitry, such as input/output circuitry 42 in FIG. 2, for driving signals off the FPGA 70 and for receiving signals from other devices. Interconnection resources 46 may be used to route signals, such as clock or data signals, through the FPGA 70. The FPGA 70 is sectorized, meaning that programmable logic resources may be distributed through a number of discrete programmable logic sectors 74. Programmable logic sectors 74 may include a number of programmable elements 50 having operations defined by configuration memory 76 (e.g., CRAM). A power supply 78 may provide a source of voltage (e.g., supply voltage) and current to a power distribution network (PDN) 80 that distributes electrical power to the various components of the FPGA 70. Operating the circuitry of the FPGA 70 causes power to be drawn from the power distribution network 80.

There may be any suitable number of programmable logic sectors 74 on the FPGA 70. Indeed, while 29 programmable logic sectors 74 are shown here, it should be appreciated that more or fewer may appear in an actual implementation (e.g., in some cases, on the order of 50, 100, 500, 1000, 5000, 10,000, 50,000 or 100,000 sectors or more). Programmable logic sectors 74 may include a sector controller (SC) 82 that controls operation of the programmable logic sector 74. Sector controllers 82 may be in communication with a device controller (DC) 84.

Sector controllers 82 may accept commands and data from the device controller 84 and may read data from and write data into its configuration memory 76 based on control signals from the device controller 84. In addition to these operations, the sector controller 82 may be augmented with numerous additional capabilities. For example, such capabilities may include locally sequencing reads and writes to implement error detection and correction on the configuration memory 76 and sequencing test control signals to effect various test modes.

The sector controllers 82 and the device controller 84 may be implemented as state machines and/or processors. For example, operations of the sector controllers 82 or the device controller 84 may be implemented as a separate routine in a memory containing a control program. This control program memory may be fixed in a read-only memory (ROM) or stored in a writable memory, such as random-access memory (RAM). The ROM may have a size larger than would be used to store only one copy of each routine. This may allow routines to have multiple variants depending on "modes" the local controller may be placed into. When the control program memory is implemented as RAM, the RAM may be written with new routines to implement new operations and functionality into the programmable logic sectors 74. This may provide usable extensibility in an efficient and easily understood way. This may be useful because new commands could bring about large amounts of local activity within the sector at the expense of only a small amount of communication between the device controller 84 and the sector controllers 82.

Sector controllers 82 thus may communicate with the device controller 84, which may coordinate the operations of the sector controllers 82 and convey commands initiated from outside the FPGA 70. To support this communication, the interconnection resources 46 may act as a network between the device controller 84 and sector controllers 82. The interconnection resources 46 may support a wide variety of signals between the device controller 84 and sector controllers 82. In one example, these signals may be transmitted as communication packets.

The use of configuration memory 76 based on RAM technology as described herein is intended to be only one example. Moreover, configuration memory 76 may be distributed (e.g., as RAM cells) throughout the various programmable logic sectors 74 of the FPGA 70. The configuration memory 76 may provide a corresponding static control output signal that controls the state of an associated programmable element 50 or programmable component of the interconnection resources 46. The output signals of the configuration memory 76 may be applied to the gates of metal-oxide-semiconductor (MOS) transistors that control the states of the programmable elements 50 or programmable components of the interconnection resources 46.

The programmable elements 50 of the FPGA 40 may also include some signal metals (e.g., communication wires) to transfer a signal. In an embodiment, the programmable logic sectors 74 may be provided in the form of vertical routing channels (e.g., interconnects formed along a y-axis of the FPGA 70) and horizontal routing channels (e.g., interconnects formed along an x-axis of the FPGA 70), and each routing channel may include at least one track to route at least one communication wire. If desired, communication wires may be shorter than the entire length of the routing channel. That is, the communication wire may be shorter than the first die area or the second die area. A length L wire may span L routing channels. As such, a length of four wires in a horizontal routing channel may be referred to as "H4" wires, whereas a length of four wires in a vertical routing channel may be referred to as "V4" wires.

As discussed above, some embodiments of the programmable logic fabric may be configured using indirect configuration techniques. For example, an external host device may communicate configuration data packets to configuration management hardware of the FPGA 70. The data packets may be communicated internally using data paths and specific firmware, which are generally customized for communicating the configuration data packets and may be based on particular host device drivers (e.g., for compatibility). Customization may further be associated with specific device tape outs, often resulting in high costs for the specific tape outs and/or reduced scalability of the FPGA 70.

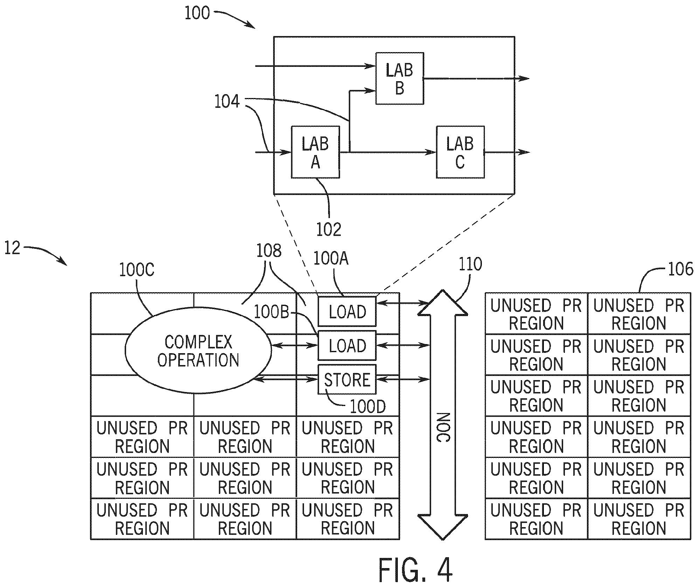

FIG. 4 is a block diagram of programmable fabric of the integrated circuit device 12 implementing a design using macros 100 (e.g., pre-compiled macros). As discussed herein, the designer may implement high-level designs to implement one or more functions onto the integrated circuit device 12 using the design software 14. The design software 14 may include a tool to convert the high-level design into a lower-level description. For example, the tool (e.g., compiler 16, lower-level virtual machine (LLVM)) may receive the high-level design in a high-level programming language and decompose the design into a lower-level design, such as LLVM intermediate representation (IR), Verilog to Routing (VTR) netlists, compiler data flow graphs, control flow graphs, and the like. The lower-level design may include primitive operators, a standard data type and/or width, a memory access mode, and the like. The tool may map the lower-level design to one or more macros 100 stored in a library. The macros 100 may be instantiated by the designer or inferred by the tool. For example, the macro 100 may be extracted as a sub-net list from the lower-level design. In another example, the tool may be used by the designer to create the design. The designer may select macros 100 from the library and determine placement and routing between each of the macros 100 within the design software 14 to create the design. The tool may subsequently implement the design using the selected macros 100.

The macros 100 (e.g., meta-atoms) may include a grouping of logic elements (e.g., that may be tech mapped, placed (e.g., relative to other elements in the macro), and internally routed. For example, the macros 100 may include functional blocks, such as LABs 102, RAM blocks, DSP blocks, M20k columns, and so on. The macros 100 may also include routing between each of the function blocks to provide functionality, operations, and/or constant values. For communication between the macros 100, each macro 100 may include input/output connections that may be communicatively coupled by overlapping an input connection of one macro 100 with an output connection of an adjacently placed macro 100 or by connecting both macros 100 to a routing resource (e.g., a network-on-chip, traces, data buses, etc.).

As illustrated, the macro 100 may include three LABs 102 and intra-macro routing resources 104. The LABs 102 may include smaller programmable regions (e.g., logic elements, configurable logic blocks, or adaptive logic modules). By grouping (e.g., clustering) multiple LABs 102 into one macro 100, the macro 100 may represent a coarse-grained operation in comparison to the individual LABs 102. That is, the LABs 102 may be a finer-grain operation in comparison to the respective macro 100. As such, the macros may be aligned to a coarse-grained grid. As used herein, coarse grained denotes a granularity that is lower than a lowest granularity possible in the fabric. For instance, coarse-grained regions may correspond to the macros 100, be aligned to a grid, and may contain multiple of two or more of the following: LABs 102, RAM blocks, DSP blocks, M20k blocks, and other components of the integrated circuit device 12. As illustrated, the macro 100 may be a generally rectangular bounding box with three LABs 102A, 102B, and 102C communicatively coupled by the intra-macro routing resources 104. However, the macro 100 may be any suitable shape or size. For example, a shape of the macro 100 may be square, circular, oval, hexagonal, rectangular, and so on. In another example, the macro 100 may include any suitable number of LABs 102, such as two or more LABs, five or more LABs, ten or more or more LABs, twenty or more or more LABs, one-hundred or more LABs, and so on. The macro 100 may be pre-compiled with the LABs 102 and stored in a library prior to the designer implementing a design. For example, the macros 100 may be pre-compiled and stored in the library prior to compilation of the integrated circuit device 12. In some embodiments, the designer may download the library using the tool from the integrated circuit device 12 and/or the library may be integrated into the tool.

The macros 100 may be timing closed prior to compiling the integrated circuit device 12. For example, each macro 100 may include a maximum frequency (Fmax) and timing that may be received from a register of the integrated circuit device. As such, the macros 100 may be treated as black boxes with one or more timing delays when the tool performs timing analysis on the design (e.g., full design). For example, the timing analysis may be performed between each of the macros 100 and/or based on a bit-level logic corresponding to the macros 100. In this way, timing analysis may be improved (e.g., sped up) due to treating each of the macros 100 as black boxes.

The macros 100 may provide functionality and/or implement complex circuits or subsystems on the integrated circuit device 12. For example, a first macro 100A and a second macro 100B may correspond to a load operation, a third macro 100C may correspond to a complex operation, and a fourth macro 100D may correspond to a store operation and placed in a respective region 106. For example, a macro 100 may represent a 32-bit add. In another example, the macro 100 may represent an inverse-tangent operation.

To implement the design, the tool may perform a place and route operation with one or more macros 100. The macros 100 may be placed (e.g., loaded) into one or more respective regions 106 of the integrated circuit device 12. For example, a programmable fabric of the integrated circuit device 12 may include a coarsened macro grid (e.g., array) with multiple regions 106. The grid may include repeating patterns of sectors 74, group of sectors 74, and/or portions of sectors 74 or any other grouping. A sizing and/or a positioning of the grid may influence QoR variability. For example, a coarser-grid with larger regions 106 may use less compilation time in comparison to a finer-grid with smaller regions 106 since more macros 100 may fit into the larger regions 106 in comparison to the smaller regions 106. The larger regions 106 may include two more sectors, two or more partitions, and the like while the smaller regions 106 may include a portion of a sector, one or more sectors, a portion of a partition, one or more partitions, and so on. Additionally or alternatively, the coarser-grid may include a higher QoR variability due to the larger regions 106 in comparison to the smaller regions 106. By way of example, the grid may be configured with repeating LABs, DSP blocks, M20K columns, left reflections, right reflections, and/or the like. The regions 106 may be individually configured, such as during a partial reconfiguration of the integrated circuit device 12, or collectively reconfigured, such as during a reconfiguration of the integrated circuit device 12, via a bit stream with data indicative of a macro 100, a portion of a macro 100, and/or one or more macros 100.

As illustrated, the integrated circuit device 12 may include an array of regions 106. In the illustrated example, the regions 106 are uniform in shape and size. The regions 106 may be any suitable shape (e.g., oval, rectangular, hexagonal) or size (e.g., of differing sizes). For example, the shape and/or size of the regions 106 may be determined based on an allocation of resources within the programmable fabric. The regions 106 may be communicatively coupled through boundary interfaces, global networks with switches, communication wires, trace lines/metal interconnect layers, and the like.

The macros 100 may be placed into a respective region 106 of the integrated circuit device 12 based on the design. Additionally or alternatively, the macros 100 may be placed based on the allocation of resources within the respective region 106. For example, the macro 100 may be placed into two regions 106 if the amount of resources consumed by the macro 100 is greater than the amount of resources within one region 106. In another example, multiple macros 100 may be placed within one region if the amount of resources consumed by the multiple macros 100 is less than the amount of resources within the region 106, thereby improving placing and routing efficiency and/or operation of the integrated circuit device 12. For example, the first macro 100A and the second macro 100B may be placed in one region 106, the third macro 100C may be placed in six regions 106, and the fourth macro 100D may be placed in one region 106. That is, a macro 100 may be placed into a respective region 106, one or more respective regions 106, a portion of a region 106, and so on. In this way, placement of the one or more macros 100 in the regions 106 may be constrained to the regions 106 but may also be flexible.

After being placed in the respective regions 106, the tool may communicatively couple the macros 100 via inter-macro routing resources 108 to implement the design. The inter-macro routing resources 108 may include connection wires, traces, programmable elements 50 (e.g., gates, flip-flops), and the like. The inter-macro routing resources 108 may be the same or different from the intra-macro routing resources 104. The inter-macro routing may use a bit-level incremental router, one or more pre-compiled bus routes, and/or macro input/output (I/O) connections. The bit-level incremental router may iteratively modify or refine existing routing between two or more macros 100 to improve quality of data transfer, such as by reducing a total wire length optimizing timing, and/or minimizing congestion. The bit-level incremental router may consider bit-level connections between each of the macros 100 and iteratively improve the routing to improve operational efficiency of the integrated circuit device 12. Additionally or alternatively, the bit-level incremental router may consider the intra-macro routing 104 to improve operation efficiency. The pre-compiled bus resources may include shared communication pathways (e.g., physical channel, virtual channel) that provides for data and/or signals transmission between the macros 100. For example, the bus resource may be traces that connect from an output connection of a macro 100 to the input connection of a different macro 100. The pre-compiled bus resources may be pre-compiled and stored in the library for use by the designer. Additionally or alternatively, the input/output connections of two or more macros 100 may overlap or be adjacent with boundary connections that overlap based on placement of the macros 100 on the integrated circuit device 12. Since the routing between them macros 100 are connected by construction, the bit-level incremental router may not perform the routing functions. As such, efficiency of the place and route operation may be improved.

To improve implementation and increase flexibility of placement locations, the integrated circuit device 12 may include a network-on-chip (NOC) 110. The NOC 110 may be a hardened structure with a known location on the integrated circuit device 12. Placement of the macros 100 adjacent to the NOC 110 may improve data consumption and/or production logic placement. For example, the macros 100 may transmit to and receive data from a memory using the NOC 110, thereby improving operation efficiency. As illustrated, the memory access units (e.g., first macro 100A, second macro 100B, fourth macro 100D) may be placed in regions 106 adjacent to or coupled to the NOC 110.

Additionally or alternatively, multiple designs may be placed and routed between the regions 106 using the macros 100. That is, multiple designs may be implemented on the integrated circuit device 12 based on a size of the regions 106 and/or or their source utilization types (e.g., LABs, DSPs). For example, the tool may place and route a first design using the macros 100 in a first portion of the integrated circuit device 12 and place and route a second design using the macros 100 in a second portion of the integrated circuit device 12. In an embodiment, the first portion and the second portion may overlap, which may improve implementation efficiency. In other embodiments, the first portion and the second portion may not overlap based on optimization parameters of the first design and/or the second design.

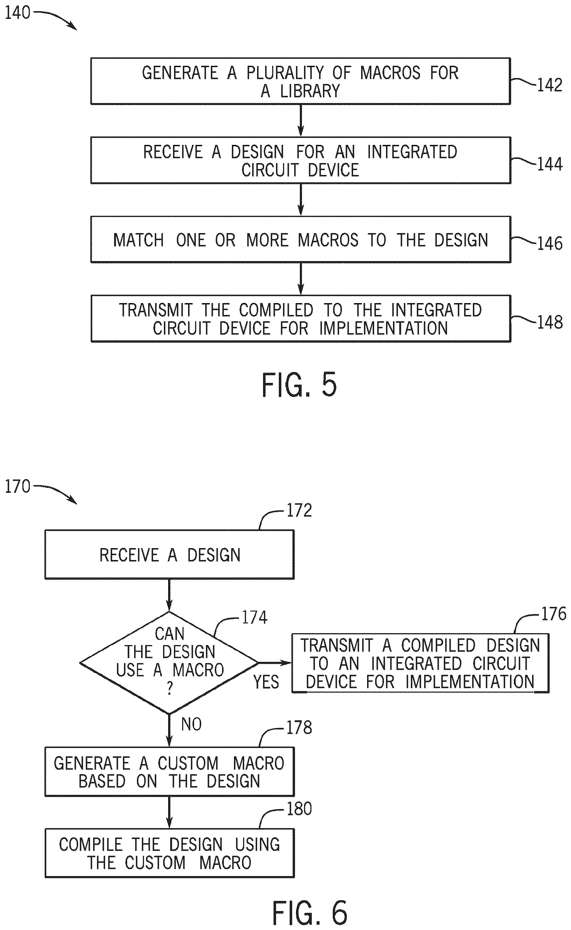

FIG. 5 is a flowchart of an example method 140 for generating one or more macros 100 for a library and configuring the integrated circuit device 12 using the one or more macros 100. For example, the library may include one or more pre-compiled macros 100 with common functionalities, operations, and/or constant values accessible to the designer. For example, the pre-compiled macros 100 may be downloadable from a cloud repository to be used by the design software 14, bundled in the design software 14, bundled in an install package and/or update package, stored on the integrated circuit device 12, stored in memory (e.g., flash or CD-ROM), stored in memory communicatively coupled to the integrated circuit device, and the like. As such, the design software 14 may use one or more macros 100 in implementing the design. The designer may use the design software 14 and/or the tool to create designs using the pre-compiled macros 100 and the tool may place and route the macros 100 on the integrated circuit device 12 to realize the design. Since the macros 100 may be pre-compiled, the compilation time experienced by the designer may be reduced relative to compiling the whole design from the ground up. Moreover, the integrated circuit device 12 may include the array of regions 106, which may decrease a number of placement options for the macros 100. In this way, variability of QoR may decrease due to reduced variance in different placements in different embodiments.

At block 142, a plurality of macros 100 is generated for a library. The library may include macros 100 generated by, for, and/or using the design software 14. For example, the library may include multiple macros 100 each for implementing an operation, a constant value, an operator, a functionality, and/or the like onto the integrated circuit device 12. The macros 100 may be generated by the manufacturer, the designer, other users (e.g., designers), third parties, and/or any other suitable source. Additionally or alternatively, the macros 100 may be updated by the manufacturer and/or other users and transmitted to the design software 14 to update the library. For example, the manufacturer may redesign one or more macros 100 to improve implementation efficiency or increase flexibility with additional options and transmit an indication of the redesigned macro 100 to the library for storage. In another example, the macros 100 may include one or more functions that may be specific to the designer. The designer may load one or more customized macros 100 into the library prior to implementing the design. Still in another example, the designer may load the design into the design software 14, and during the decomposition of the design, the tool may identify a portion of the design that does not map to a macro 100 and compile a customized macro based on the portion of the design. The tool may store the custom macro into the library for subsequent designs. In this way, the tool may infer a macro from designer input. Additionally or alternatively, the tool may access entries in storage that detail the macros 100.

The library may also include one or more inter-macro routing resources 108. For example, the library may include pre-compiled bus routes generated using fixed and/or regular properties of the macro input/output connections. The bus routes may be instantiated by the designer, the tool, or generated by the manufacturer.

At block 144, the design for an integrated circuit device 12 is received. For example, the design software 14 may receive a design for implementation onto the integrated circuit device 12.

At block 146, one or more macros 100 is matched to the design. The design may be bounded into a data flow graph including one or more graph nodes that may be mapped to one or more macros 100 stored in the library. For example, each of the graph node(s) may map to a respective macros 100 corresponding to a memory access unit. Additionally or alternatively, one or more graph node(s) may map to one macros 100 corresponding to a complex operation and/or functionality that may be divided into one or more smaller operations that may each be mapped to separate macros 100 or may amass into a single macro 100 for a common operation. Additionally or alternatively, the design may include a portion that may not be mapped to the one or more macros 100. The portion of the design may be implemented on the integrated circuit device 12 as a fine-grained portion. To this end, the tool may generate a bit stream indicative of the portion of the design. The tool may compile the bit stream and the one or more macros 100 to generate the compiled design.

At block 148, the compiled design is transmitted to the integrated circuit device 12 for implementation. For example, the tool may transmit a bit stream indicative of the design to the integrated circuit device 12 to be implemented into one or more regions 108. The tool may perform a place and route operation to implement the design on the integrated circuit device 12. For example, the tool may place the macro 100 into one region 106, a portion of a region 106, or one or more regions 106, and the tool may determine routing between one or more macros 100. As discussed herein, the macros 100 may be pre-compiled. As such, the compilation time experienced by the user, including placing and routing the macros 100, may be reduced in comparison to implementation of fine-grained operations that are compiled during user compile time. Additionally or alternatively, the macros 100 may be loaded into the regions 106 by a bit stream and used to partially reconfigure the integrated circuit device 12. This partial reconfiguration may be used to perform different objectives in the same region 106 in a sequential manner before and after a partial reconfiguration.

The method 140 includes various steps represented by blocks. Although the flowchart illustrates the steps in a certain sequence, it should be understood that the steps may be performed in any suitable order and certain steps may be carried out simultaneously, where appropriate. Further, certain steps or portions of the method 140 may be performed by separate systems or devices.

FIG. 6 is a flowchart of an example method 170 for configuring the integrated circuit device 12 using one or more macros 100. In certain instances, portions of the design may not map to the one or more macros 100 stored in the library. For example, if the design includes many bit-level operations, a portion of the design may not map to the macros 100 stored in the library. The portions of the design may be dynamically clustered into roughly macro-sized blocks and implemented on the programmable fabric. During compilation, the blocks may be generated into custom macros 100 and stored for subsequent designs.

At block 172, a design is received. For example, the designer may create the design using the design software 14 and/or load the design into the design software 14.

At block 174, a determination if the design uses one or more macro(s) 100 is made. As previously noted, the tool may decompose the design into coarse-grained operations (e.g., primitives). The tool may determine if the design may be implemented using only macros by attempting to map the operations to one or more macros 100 stored in the library.

If the design may be implemented using the one or more macro 100, then at block 176, the compiled design is transmitted to the integrated circuit device 12 for implementation. For example, the tool may perform a place and route operation to determine a location of each of the macros 100 on the integrated circuit device 12 and/or routing between each of the macros 100. Additionally or alternatively, the tool may transmit a bit stream (e.g., configuration bit stream) with pre-compiled macro(s) 100 to a region 106, a portion of a region 106, or one or more regions 106, for the placement.

If the design may not be implemented using one of the macros 100, then at block 178, a custom macro 100 may be generated. The tool may cluster the portion of the design into one or more macro-sized blocks and compile the one or more macro-sized blocks to generate the custom macro 100 during the compilation. For example, the tool may perform the place and route operation to determine a placement and/or a routing of the custom macro 100 and one or more pre-compiled macros 100 to implement the design. The tool may transmit a bit stream indicative of the custom macro 100 and/or the pre-compiled macros 100 to the integrated circuit device 12. That is, the tool may implement a portion of the design using macros 100 and implement a remaining portion of the design using a custom macro 100. The custom macro 100 may be compiled during the user compilation time. However, once compiled, the compilation does not need to be performed again if the custom macro 100 is saved to the library to be used in the future. The compilation time experienced by the designer may be reduced relative to compiling the whole design from the ground up since at least one pre-compiled macro 100 may be used. Additionally or alternatively, the design may be compiled with a combination of macros 100 and fine-grained operations corresponding to the portion of the design. Although fine-grained operations may be used without using macros 100, the compilation time may be reduced since one or more pre-compiled macros 100 may be implemented without compiling during user compile time.

At block 180, the design is compiled using the custom macro 100. The tool may compile the design using one or more pre-compiled macros 100 and one or more macro-sized blocks corresponding to the custom macro 100. That is, the tool may implement the design as a mix of coarse-grained operations and fine-grained operations, thus reducing compilation time experienced by the designer.

Returning to the custom macro 100, a size of the custom macros 100 may be determined based on user input, the design, or a combination thereof. For example, the designer may determine a number of functionalities a number of LABs 102, a size of the portion of the design, and the like being clustered into the custom macro 100. Additionally or alternatively, the designer may input one or more cut lines in the portions of the design and the tool may cluster and compile the custom macro 100 based on the cut lines. In another example, the tool may provide a suggested custom macro 100 size and/or portions of the design to cluster into the custom macro 100. Additionally or alternatively, the tool may dynamically generate the custom macros 100 based on the portion of the design that does not map to the pre-compiled macros 100. For example, the tool may determine a shape and/or a size of the custom macro 100 based on a number of LABS 102, a size and/or a shape of unoccupied regions 106 within the integrated circuit device 12, a functionality, and the like. Additionally or alternatively, the tool may iteratively determine the shape and/or the size of the custom macro 100 to improve the place and route operation. The size of the custom macro 100 may impact compilation time and QoR. For example, a larger custom macro 100 with more LABs 102 may decrease compilation time but also decrease QoR in comparison to smaller custom macro 100 with less LABs 102.

The method 170 includes various steps represented by blocks. Although the flow chart illustrates the steps in a certain sequence, it should be understood that the steps may be performed in any suitable order and certain steps may be carried out simultaneously, where appropriate. Further, certain steps or portions of the method 170 may be performed by separate systems or devices.

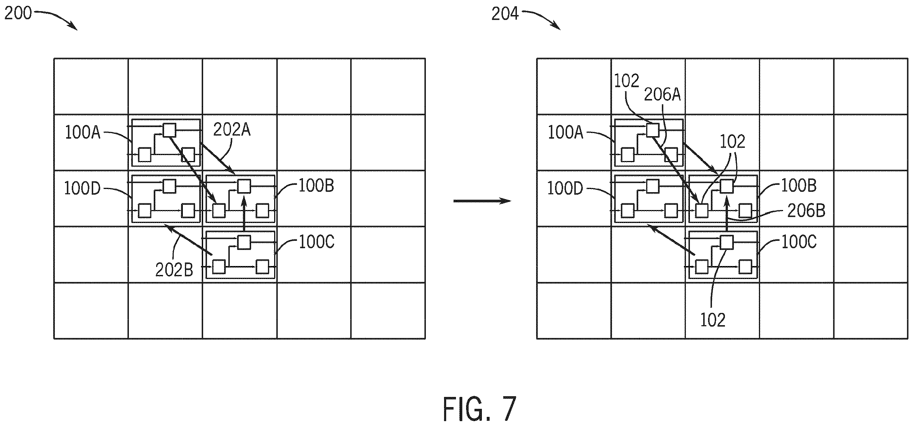

FIG. 7 is a schematic diagram for recursively performing the place and route operation for one or more macros 100 on the integrated circuit device 12. The place and route operation may be run at recursively smaller granularities to address bottlenecks, such as inter-macro critical paths or routing congestion. For example, the tool may first place and route one or more macros 100 in one or more regions 106. Then, the tool may break the macros 100 into progressively finer granularities and run additional place and route operations. For example, the tool may perform the second place and route operation between the LABs 102 of each macro 100 to improve operation of the integrated circuit device 12. Still in another example, the tool may perform a third place and route operation between programmable elements 50 of the LABs 102. These finer level fix-ups may address bottlenecks by adjusting placement of finer-grained elements within the macro 100, providing additional routing between the finer-grained elements, adjusting routing within the macro 100, adjusting routing between the finer-grained elements of the macros 100, and the like. That is, the tool may perform additional place and route operations based on placement of the elements bounded by the macros 100 and/or on the integrated circuit device 12. In certain embodiments, the additional place and route operations may be performed in response input by the designer. For example, the designer may indicate a bit-level for the additional place and route operation and/or a flat compilation.

With the foregoing in mind, FIG. 7 illustrates a first place and route operation 200 indicated by first routing resources 202A and 202B (e.g., the inter-macro routing resources 108 described with respect to FIG. 4) and a second place and route operation 204 indicated by second routing resources 206A and 206B (e.g., intra-macro routing resources 104 described with respect to FIG. 4). During the first place and route operation 200, the tool may communicatively couple the first macro 100A with the second macro 100B via the first routing resources 202A and the third macro 100C with the fourth macro 100D via the first routing resources 202B. The second place and route operation 204 may be at a finer granularity in comparison to the first place and route operation 200. For example, during the second place and route operation 204, a LAB 102 of the first macro 100A may couple to a LAB 102 of the second macro 100B via the second routing resource 206A and a LAB 102 of the third macro 100C may couple to an additional LAB 102 of the second macro 100B. The second routing resources 206A and 206B may provide additional pathways for communication between the macros 100, which may reduce bottlenecks. The second routing resources 206A and 206B may couple to I/O connections of the LABs 102, which may be finer-grained in comparison to the first routing resources 202A and 202B. For example, the second routing resource 206A and 206B may be fine-grained in comparison to the first routing resource 202A and 202B. As such, the tool may improve placement and routing between each of the macros 100 at different bit-levels. In an embodiment, the first routing resources 202A and 202B may be the same as the second routing resources 206A and 206B. In other embodiments, the first routing resources 202A and 202B may be different from the second routing resources 206A and 206B. Additionally or alternatively, some of the first routing resources 202A and 202B may be the same as the second routing resources 206A and 206B, while some may be different.

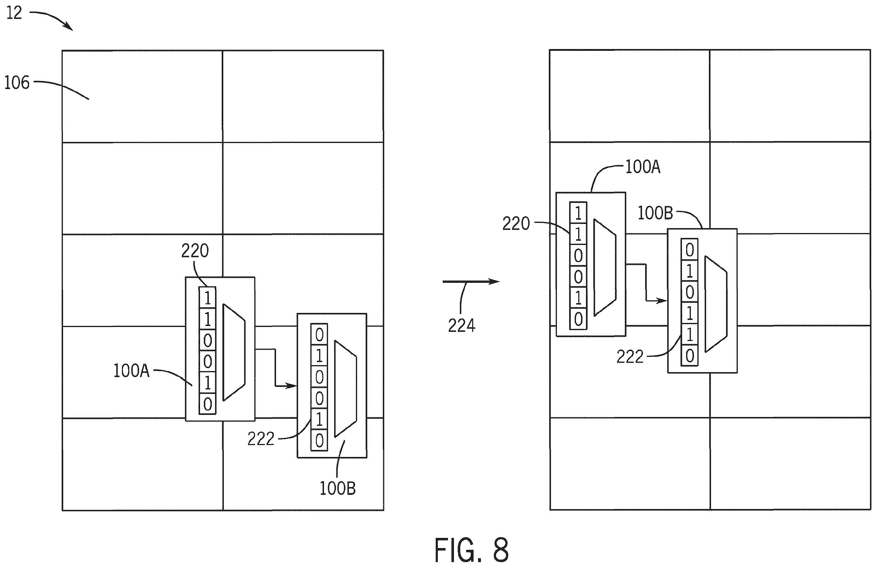

FIG. 8 is a schematic diagram for adjusting one or more macros 100 to implement the design on programmable fabric of the integrated circuit device 12. As discussed herein, reduction in compilation time by using macros 100 may come from compiling the fine-grained logic within the macro 100 prior to compilation of the integrated circuit device. As such, the device compilation may be used to make decisions on coarser-grained logic such as the regions 106, the coarse-grained macros 100, and so on. However, the use of different functions (e.g., add, subtract, multiply, divided) in a design may involve the use of many different macros, which may increase the library size. In an embodiment, the library may include a base set of macros 100 corresponding to certain functions. The macros 100 may be adjusted (e.g., mutated, reprogrammed, reconfigured) to provide additional functions. That is, the number of macros 100 stored in the library may be reduced by operating on the macros 100 during the compilation. The macros 100 may be dynamically set with a lookup table (LUT) mask during the compilation to assign constant values, apply inversions, apply switching inputs, and the like.

The LUT mask may include a LUT configuration, such as a set of bits that may be adjusted to adjust the functionality of a respective macro 100. For example, a macro 100 providing a greater than or equal to operation may be adjusted to an equal to operation by adjusting the LUT configuration of the macro 100. That is, the macro 100 may be compiled to switch between the operations by changing only a few bits in the logic. Additionally or alternatively, a macro 100 providing a divide operation may be adjusted to a multiply operation by adjusting the LUT configuration of the macro 100. With coarse-grained operations, the LUT mask adjustments may be performed very quickly with little to no impact in designer compilation time.

As illustrated, a first implementation of a macro 100A includes a first LUT mask 220 with a LUT configuration of '110100' and a second implementation of a macro 100B includes a second LUT mask 222 with a LUT configuration of '010010.' By way of example, the first LUT mask 220 may set the first macro 100A to a constant value and the second LUT mask 222 may set the second macro 100B to a first operation (e.g., multiply). The first LUT mask 220 and/or the second LUT mask 222 may be adjusted by dynamically setting the values in the LUT, as illustrated by arrow 224. After setting the second LUT mask 222 of the second macro 100B, the LUT configuration may be adjusted to '010110,' which may correspond to a second operation (e.g., divide) that may be different from the first operation. Additionally or alternatively, the first LUT mask 220 may be adjusted to set the first macro 100A to a constant value that may be different from the original constant value. In this way, the LUT masks 220 and 222 may be dynamically adjusted to change the functionality of the first macro 100A and/or the second macro 100B. As such, the library may include a base set of macros 100 that may be adjusted which may reduce the library size.

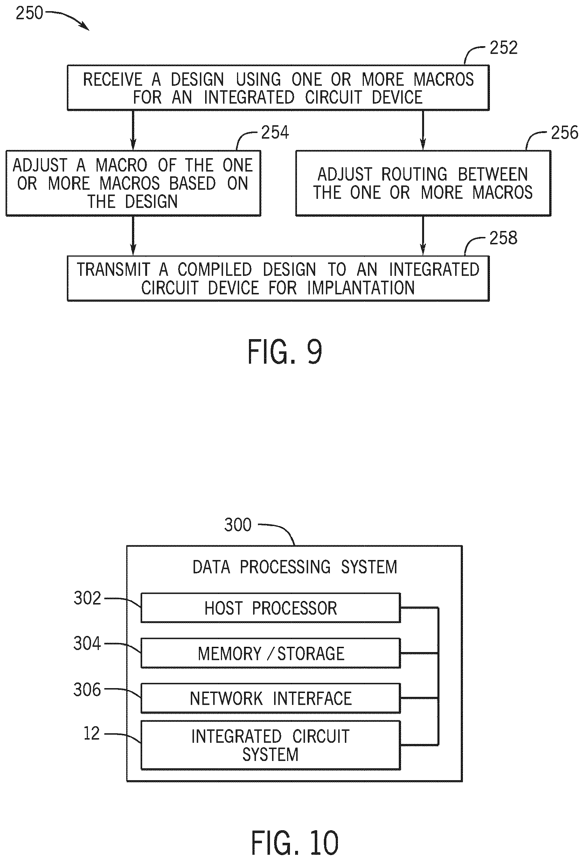

FIG. 9 is a flowchart of an example method 250 for adjusting the one or more macros 100 to implement the design on the integrated circuit device 12. For example, the place and route operation may be recursively performed at finer granularities to reduce bottlenecks. Additionally or alternatively, the functionality (e.g., operation) of a macro 100 may be adjusted by adjusting the LUT mask. In this way, the design may be implemented using one or more macros 100.

At block 252, a design using one or more macros 100 for an integrated circuit device 12 is received, similar to block 144 described with respect to FIG. 5. The tool may decompose the design into one or more coarse-grained operations and map the operations to macros 100 stored in a library. The tool may perform a place and route operation using the one or more macros 100 based on the design.

At block 254, a macro 100 of the one or more macros 100 may be adjusted based on the design. For example, the design may change based on designer input and the change may be implemented by adjusting one or more bits within the macro 100. In another example, a portion of the design may include an operating parameter that may correspond to an inverse operation of a macro 100. As such, the tool may set a LUT mask to adjust a functionality of the macro 100 based on the design. The tool may dynamically set the LUT mask during compilation of the design.

At block 256, routing between the one or more macros 100 may be adjusted. The tool may perform additional place and route operations at different granularities to reduce bottlenecks. For example, the tool may perform an additional place and route operation to communicatively couple one or more LABs 102 between the macros 100. In another example, the tool may perform the additional place and route operation to communicatively couple programmable elements 50 and/or logic blocks 26 within the LABs 102. The additional place and route operation may be performed during compilation of the design.

At block 258, a compiled design may be transmitted to the integrated circuit device 12 for implementation, similar to block 176 described with respect to FIG. 6 and block 148 described with respect to FIG. 5.

The method 250 includes various steps represented by blocks. Although the flow chart illustrates the steps in a certain sequence, it should be understood that the steps may be performed in any suitable order and certain steps may be carried out simultaneously, where appropriate. For example, the tool may first receive the design (block 252), adjust routing between the one or more macros (block 256), and then adjust a macro of the one or more macros (block 254). In another example, the tool may first receive the design (block 252), adjust a macro of the one or more macros (block 254), and then adjust routing between the one or more macros (block 256). Further, certain steps or portions of the method 250 may be performed by separate systems or devices.

Bearing the foregoing in mind, the integrated circuit device 12 may be a component included in a data processing system, such as a data processing system 300, shown in FIG. 10. The data processing system 300 may include the integrated circuit device 12 (e.g., a programmable logic device), a host processor 304 (e.g., a processor), memory and/or storage circuitry 306, and a network interface 308. The data processing system 300 may include more or fewer components (e.g., electronic display, designer interface structures, ASICs). Moreover, any of the circuit components depicted in FIG. 10 may include integrated circuits (e.g., integrated circuit device 12). The host processor 304 may include any of the foregoing processors that may manage a data processing request for the data processing system 300 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 306 may include random access memory (RAM), read-only memory (ROM), one or more hard drives, flash memory, or the like. The memory and/or storage circuitry 306 may hold data to be processed by the data processing system 300. In some cases, the memory and/or storage circuitry 306 may also store configuration programs (bit streams) for programming the integrated circuit device 12. The network interface 308 may allow the data processing system 300 to communicate with other electronic devices. The data processing system 300 may include several different packages or may be contained within a single package on a single package substrate. For example, components of the data processing system 300 may be located on several different packages at one location (e.g., a data center) or multiple locations. For instance, components of the data processing system 300 may be located in separate geographic locations or areas, such as cities, states, or countries.

In one example, the data processing system 300 may be part of a data center that processes a variety of different requests. For instance, the data processing system 300 may receive a data processing request via the network interface 308 to perform encryption, decryption, machine learning, video processing, voice recognition, image recognition, data compression, database search ranking, bioinformatics, network security pattern identification, spatial navigation, digital signal processing, or some other specialized task.

The above discussion has been provided by way of example. Indeed, the embodiments of this disclosure may be susceptible to a variety of modifications and alternative forms. Indeed, many other suitable forms of high-capacity integrated circuits can be manufactured according to the techniques outlined above. For example, other high-capacity integrated circuit devices may include one or more regions 106 that may be configured with one or more macros 100. The macros 100 may be pre-compiled to reduce the compilation time experienced by the designer. In this way, the high-capacity integrated circuit may be reconfigured and/or configured using less time. Moreover, the high-capacity integrated circuit device may include networks-on-chip used for data transfer, thereby improving implementation efficiency of the design.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### EXAMPLE EMBODIMENTS

**EXAMPLE EMBODIMENT 1.** A tangible, non-transitory, and computer-readable medium, storing instructions thereon, wherein the instructions, when executed, are to cause a processor to receive a design to be implemented onto a programmable fabric of an integrated circuit device, determine that the design is implementable using one or more macros from a library comprising a plurality of macros, where each macro of the plurality of macros includes pre-compiled logic, and compile the design by placing and routing one or more macros aligned to a coarse-grained grid on the programmable fabric.

**EXAMPLE EMBODIMENT 2.** The tangible, non-transitory, and computer-readable medium of example embodiment 1, wherein the instructions, when executed, are to cause the processor to determine a portion of the design is not implementable using the one or more macros and generate a custom macro based on the portion of the design.

**EXAMPLE EMBODIMENT 3.** The tangible, non-transitory, and computer-readable medium of example embodiment 2, wherein the instructions, when executed, are to cause the processor to generate the custom macro by determining a size or a shape of the custom macro based on user input.

**EXAMPLE EMBODIMENT 4.** The tangible, non-transitory, and computer-readable medium of example embodiment 1, wherein the instructions, when executed, are to cause the processor to determine routing between the one or more macros using a bit-level incremental router, a pre-compiled bus route stored in the library, connections of the one or more macros, or any combination thereof.

**EXAMPLE EMBODIMENT 5.** The tangible, non-transitory, and computer-readable medium of example embodiment 1, wherein the instructions, when executed, are to cause the processor to set a functionality of a respective macro of the one or more macros by setting a lookup table mask of the respective macro based on the design.

**EXAMPLE EMBODIMENT 6.** The tangible, non-transitory, and computer-readable medium of example embodiment 1, wherein the instructions, when executed, are to cause the processor to compile the design by routing between a component of a first macro of the one or more macros and a component of a second macro of the one or more macros.

**EXAMPLE EMBODIMENT** 7. The tangible, non-transitory, and computer-readable medium of example embodiment 1, wherein the instructions, when executed, are to cause the processor to compile a design by: placing a first macro of the one or more macros adjacent to a network-on-chip (NOC) and placing a second macro of the one or more macros adjacent to the NOC, wherein the first macro and the second macro are communicatively coupled via the NOC.

**EXAMPLE EMBODIMENT 8.** The tangible, non-transitory, and computer-readable medium of example embodiment 1, wherein the instructions, when executed, are to cause the processor to transmit a bit stream to at least partially reconfigure the integrated circuit device using the one or more macros, where the bit stream includes data to configure one or more regions of the coarse-grained grid.

**EXAMPLE EMBODIMENT 9.** The tangible, non-transitory, and computer-readable medium of example embodiment 8, wherein the instructions, when executed, are to cause the processor to place a macro of the one or more macros in a first region of the one or more regions, place the macro in a first set of regions of the one or more regions, or cluster a first group of macros of the one or more macros in a second region of the one or more regions.

**EXAMPLE EMBODIMENT 10.** A method may include receiving, via processing circuitry, a design to be implemented onto a programmable fabric of an integrated circuit device, determining, via the processing circuitry, that the design is implementable using one or more macros from a library comprising a plurality of macros, wherein each macro of the plurality of macros includes pre-compiled logic, and compiling, via the processing circuitry, the design by placing and routing one or more macros aligned to a coarse-grained grid on the programmable fabric.

**EXAMPLE EMBODIMENT 11.** The method of example embodiment 10, may include communicatively coupling, via the processing circuitry, a first macro of the one or more macros and a second macro of the one or more macros by overlapping an input connection of the first macro with an output connection of the second macro.

**EXAMPLE EMBODIMENT 12.** The method of example embodiment 10, may include determining, via the processing circuitry, that a portion of the design is not implementable using the one or more macros, generating, via the processing circuitry, a custom macro based on the portion of the design, and compiling, via the processing circuitry, the custom macro during the compiling of the design.

**EXAMPLE EMBODIMENT 13.** The method of example embodiment 12, where generating, via the processing circuitry, the custom macro may include determining a shape and a size of the custom macro based on the portion of the design.

**EXAMPLE EMBODIMENT 14.** The method of example embodiment 10, may include setting, via the processing circuitry, a lookup table mask of a respective macro of the one or more macros to assign a constant value, an operation, or an input.

**EXAMPLE EMBODIMENT 15.** The method of example embodiment 10, where compiling, via the processing circuitry, the design may include determining routing between a component of a first macro of the one or more macros and a component of a second macro of the one or more macros.

**EXAMPLE EMBODIMENT 16.** An integrated circuit device may include a memory comprising a plurality of macros and programmable logic circuitry comprising a coarse-grained grid configurable by one or more macros of the plurality of macros to implement a design, wherein a respective macro of the plurality of macros includes pre-compiled logic.

**EXAMPLE EMBODIMENT 17.** The integrated circuit device of example embodiment 16, comprising a network-on-chip (NOC) configurable to communicatively couple a first macro of the one or more macros and a second macro of the one or more macros.

**EXAMPLE EMBODIMENT 18.** The integrated circuit device of example embodiment 16, where each macro of the plurality of macros includes a lookup table mask corresponding to a functionality of the each macro.

**EXAMPLE EMBODIMENT 19.** The integrated circuit device of example embodiment 16 may include a plurality of pre-compiled bus routes stored in the memory and configured to communicatively couple the one or more macros.

**EXAMPLE EMBODIMENT 20.** The integrated circuit device of example embodiment 16 may include each of the plurality of macros comprise input/output connections, wherein an input connection of a first macro of the one or more macros overlaps with an output connection of a second macro of the one or more macros to communicatively couple the first macro and the second macro.

## Claims

1. A tangible, non-transitory, and computer-readable medium, storing instructions thereon, wherein the instructions, when executed, are to cause a processor to:
receive a design to be implemented onto a programmable fabric of an integrated circuit device;
determine that the design is implementable using one or more macros from a library comprising a plurality of macros, wherein each macro of the plurality of macros comprises pre-compiled logic; and
compile the design by placing and routing one or more macros aligned to a coarse-grained grid on the programmable fabric.

2. The tangible, non-transitory, and computer-readable medium of claim 1, wherein the instructions, when executed, are to cause the processor to:
determine a portion of the design is not implementable using the one or more macros; and
generate a custom macro based on the portion of the design.

3. The tangible, non-transitory, and computer-readable medium of claim 2, wherein the instructions, when executed, are to cause the processor to generate the custom macro by:
determining a size or a shape of the custom macro based on user input.

4. The tangible, non-transitory, and computer-readable medium of any of the preceding claims, wherein the instructions, when executed, are to cause the processor to:
determine routing between the one or more macros using a bit-level incremental router, a pre-compiled bus route stored in the library, connections of the one or more macros, or any combination thereof.

5. The tangible, non-transitory, and computer-readable medium of any of the preceding claims, wherein the instructions, when executed, are to cause the processor to:
set a functionality of a respective macro of the one or more macros by setting a lookup table mask of the respective macro based on the design.

6. The tangible, non-transitory, and computer-readable medium of any of the preceding claims, wherein the instructions, when executed, are to cause the processor to compile the design by:
routing between a component of a first macro of the one or more macros and a component of a second macro of the one or more macros.

7. The tangible, non-transitory, and computer-readable medium of any of the preceding claims, wherein the instructions, when executed, are to cause the processor to compile the design by:
placing a first macro of the one or more macros adjacent to a network-on-chip (NOC); and
placing a second macro of the one or more macros adjacent to the NOC, wherein the first macro and the second macro are communicatively coupled via the NOC.

8. The tangible, non-transitory, and computer-readable medium of any of the preceding claims, wherein the instructions, when executed, are to cause the processor to:
transmit a bit stream to at least partially reconfigure the integrated circuit device using the one or more macros, wherein the bit stream comprises data to configure one or more regions of the coarse-grained grid.

9. The tangible, non-transitory, and computer-readable medium of claim 8, wherein the instructions, when executed, are to cause the processor to:
place a macro of the one or more macros in a first region of the one or more regions;
place the macro in a first set of regions of the one or more regions; or
cluster a first group of macros of the one or more macros in a second region of the one or more regions.

10. An integrated circuit device, comprising:
a memory comprising a plurality of macros; and
programmable logic circuitry comprising a coarse-grained grid configurable by one or more macros of the plurality of macros to implement a design, wherein a respective macro of the plurality of macros comprises pre-compiled logic.

11. The integrated circuit device of claim 10, comprising a network-on-chip (NOC) configurable to communicatively couple a first macro of the one or more macros and a second macro of the one or more macros.

12. The integrated circuit device of claim 11, wherein the first macro and the second macro are adjacent to the NOC, wherein the first macro and the second macro are communicatively coupled via the NOC.

13. The integrated circuit device of any of claims 10-12, wherein each macro of the plurality of macros comprises a lookup table mask corresponding to a functionality of each macro.

14. The integrated circuit device of any of claims 10-13, comprising a plurality of pre-compiled bus routes stored in the memory and configured to communicatively couple the one or more macros.

15. The integrated circuit device of any of claims 10-14, comprising each of the plurality of macros comprise input/output connections, wherein an input connection of a first macro of the one or more macros overlaps with an output connection of a second macro of the one or more macros to communicatively couple the first macro and the second macro.
